# FASCICULE DE BREVET EUROPEEN

(11) **EP 2 452 113 B1**
(45) Date de publication et mention de la délivrance du brevet: **12.03.2014**
(21) Numéro de dépôt: 10731494.0
(22) Date de dépôt: 29.06.2010
(51) Int. Cl.: F16L 37/091, F16B 21/18, F16B 21/20

(54) **EMBOUT D'INSERTION POUR RACCORD OU ANALOGUE DÉMONTABLE PAR DÉVISSAGE**
MITTELS HERAUSSCHRAUBEN DEMONTIERBARES EINSTECK-FITTING FÜR EINE KUPPLUNG ODER DERGLEICHEN
PLUG-IN FITTING FOR A COUPLING OR THE LIKE THAT CAN BE DEMOUNTED BY UNSCREWING

(30) Priorité: 08.07.2009 FR 0903362
(43) Date de publication de la demande: 16.05.2012
(73) Titulaire: Parker Hannifin Manufacturing France, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2010/059223
(87) Numéro de publication internationale: WO 2011/003778

(56) Documents cités:
- EP-A1- 1 591 709
- WO-A1-2007/004859
- DE-U1-202005 000 749
- FR-A5- 2 102 518

## Description

La présente invention concerne les moyens qui rendent un logement cylindrique ou puits de connexion apte à recevoir et retenir de manière étanche l'extrémité d'un tube dont le volume interne est mis en communication avec un canal qui débouche au fond du puits.

### ARRIERE PLAN DE L'INVENTION

Dans le domaine hydraulique ou pneumatique, un équipement fonctionnel est alimenté par un fluide de commande ou de puissance qui lui parvient par un tube qu'il faut raccorder de manière étanche à un canal interne de l'équipement. Pour ce faire, le corps de l'équipement est pourvu d'un alésage ou puits qui débouche sur une de ses surfaces extérieures et dans le fond duquel aboutit le canal à alimenter. Les moyens de raccordement du tube sont à implanter dans cet alésage de manière étanche. Ces moyens de raccordement peuvent affecter de nombreuses formes de réalisation du côté du tube. Du côté de l'équipement, on dispose, soit d'une connexion vissée d'un manchon qui porte les organes de connexion du tube dans le puits taraudé à cet effet, soit d'un manchon ancré dans le puits. L'ancrage est assuré par des dents qui sont usinées sur la surface extérieure du manchon et qui coopèrent avec de puits après emmanchement à force du manchon dans le puits. Cet emmanchement requiert un outillage spécifique pour le réaliser et engendre, dans les pièces emmanchées, des contraintes et tensions permanentes qui nuisent à leur durée de vie en étant l'origine de microfissures aboutissant à un raccord fuyard voire à la déconnexion spontanée de ce dernier.

On a donc cherché à supprimer les contraintes de ce type de connexion et à diminuer les efforts de montage. Une solution connue est illustrée par le document FR 2 102 518 qui divulgue un embout d'insertion selon le préambule de la revendication 1. Ce document révèle en effet une bague cylindrique dentée, logé dans une gorge externe du manchon inséré dans le puits et qui vient mordre la surface interne de ce puits. La flexibilité des dents est réduite et leur pouvoir d'accrochage relativement faible.

Surtout, cette liaison n'est pas démontable sans destruction d'au moins la bague dentée. Or on sait que pour rendre une liaison agrippée démontable par rotation, il faut donner à la partie active des dents une pente de sorte que la « morsure » de chaque dent sur la surface à laquelle elle s'agrippe soit une tangente à une hélice appartenant à la surface et non une tangente à un cercle de celle-ci. L'inconvénient majeur de ces liaisons agrippantes et dévissables résident dans le fait qu'elles sont spontanément dévissables sous l'effet de d'efforts axiaux entre les deux éléments liés.

L'invention est un perfectionnement à cette solution visant à rendre démontable la connexion réalisée.

En outre, l'invention vise à renforcer la force d'accrochage de l'embout dans l'alésage sans pour autant augmenter les efforts à développer pour réaliser l'emmanchement ni installer des contraintes importantes dans la connexion.

### OBJET DE L'INVENTION

C'est ainsi que l'invention a pour premier objet un embout d'insertion pour la connexion d'une pièce portant cet embout avec une autre pièce équipée d'un alésage pour recevoir cet embout, l'embout étant pourvu d'une gorge externe dans laquelle est logée une bague cylindrique possédant des dents en saillie de sa surface extérieure dont les extrémités sont contenues, à l'état libre, dans une enveloppe sensiblement cylindrique de diamètre plus important que le diamètre de l'alésage, caractérisé en ce que la bague est logée dans la gorge libre en rotation et en coulissement, en ce que la largeur axiale de la gorge est de dimension plus importante que la largeur axiale de la bague, en ce que l'extrémité des dents est taillée en biais pour imprimer une morsure dans l'alésage qui possède une inclinaison sur la génératrice de cette surface et en ce que l'un des flancs de la gorge et l'extrémité en regard de la bague possèdent des moyens de butée en rotation de la bague dans la gorge de sorte que, lorsque la bague est en butée contre ce flanc, la bague est libre en rotation par rapport à l'embout sur un angle inférieur à 360 degrés.

Bien entendu, la différence entre les dimensions axiales de la gorge et de la bague sont suffisantes pour que les moyens de butée puissent échapper et que la bague soit totalement libre en rotation par rapport à la gorge. Ce sera notamment le cas lorsque la bague sera en appui sur l'autre flanc de la gorge. Le premier flanc (flanc d'entraînement) est celui situé en arrière de la gorge dans le sens de l'emmanchement et le second est le flanc avant.

Par ces caractéristiques, la rotation de la bague est rendue possible par rotation de l'embout, lorsqu'on place les organes de butée en interférence circonférentielle. Cette position relative de ces organes de butée est au choix de l'opérateur qui doit axialement rapprocher la bague du flanc de la gorge équipée de cette butée.

De manière avantageuse, l'embout porte une butée d'emmanchement élastiquement déformable dans le sens de l'emmanchement qui, en l'absence d'effort d'emmanchement, maintient la bague éloignée du flanc de la gorge pour empêcher toute coopération entre les butées d'entraînement en rotation. Ce maintien élastique est à vaincre par l'opérateur qui veut défaire la connexion.

Cet ensemble de caractéristiques permet le démontage par dévissage de l'assemblage. Ainsi, une rotation entre l'embout et l'alésage fait décrire à chaque dent une hélice sur la surface interne de l'alésage. Il permet aussi de préserver l'assemblage d'un démontage intempestif, car lorsque l'ensemble est en service, notamment s'il s'agit d'un raccordement de canalisations de fluides, les moyens de butée sont découplés par éloignement axial l'un de l'autre, grâce au coulissement axial possible de la bague dans la gorge.

Ces moyens peuvent par exemple affecter la forme d'une dent en saillie axiale du flanc de la gorge et d'une même dent en saillie d'un bord axial de la bague ou d'une entaille ménagée dans ce bord. Il faudra prendre en compte dans le dessins de ces butées ou index angulaires, le fait que c'est au niveau de ce flanc que se transmet l'effort d'emmanchement de l'embout à la bague et que cet effort n'ait pas pour conséquence la destruction des moyens de butée susdits, destruction ou endommagement qui rendraient impossible le démontage par dévissage de la liaison. En outre, il convient de donner à ces dents une forme qui interdise tout contact axial stable de l'embout et de la bague par leur intermédiaire, pour éviter lors de l'emmanchement de placer la bague dans une position telle qu'il n'est plus possible de la manoeuvrer en rotation par l'embout.

Pour éviter que cet éloignement soit obtenu par un vissage spontané de la bague, les dents de cette dernière sont à angle vif dans le sens de ce vissage.

En outre, pour un ancrage de l'embout dans l'alésage plus ferme, les dents sont en regard d'une gorge secondaire ménagée dans le fond de la gorge d'accueil de la bague dans laquelle elles peuvent élastiquement pénétrer, lorsque la bague est en butée contre le flanc susdit de la gorge.

Les dents sont de préférence réalisées par des languettes axiales découpées dans la paroi de la bague dont l'extrémité libre, opposée à la racine de chaque dent, est recourbée vers l'extérieur pour former une griffe de cramponnage de la bague dans la surface de l'alésage. La griffe est alors portée par une lame flexible, la languette, qui au moment de l'emmanchement, plonge élastiquement dans la gorge secondaire. L'effort d'emmanchement est alors beaucoup plus faible que si ce fléchissement élastique n'était pas possible.

En cas de tentative d'extraction de l'embout (soit sous une force extérieure d'arrachement, soit du fait de l'établissement d'une pression à l'intérieur de l'assemblage, si ce dernier concerne des pièces tubulaires formant conduite de fluide sous pression), la bague reste accrochée dans l'alésage et l'embout coulisse vers l'arrière. Les lames élastiques des dents sont alors repoussées vers l'extérieur de la gorge secondaire et forcent l'ancrage des dents dans l'alésage. La raideur radiale des dents est alors considérablement plus forte que lorsque les lames étaient en regard de la gorge secondaire. L'ancrage est alors extrêmement ferme. La bague est au contact du flanc avant de la gorge et retient l'embout ancré dans l'alésage.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels :
- la figure 1 est le dessin de deux pièces avec alésage et embout, assemblées conformément à l'invention,
- la figure 2 illustre par une demi coupe axiale, une bague d'assemblage des deux pièces de la figure 1,
- les figure 3A, 3B, 3C illustrent une séquence de montage de l'embout de l'invention dans un alésage,
- la figure 4 illustre par une demi coupe axiale, une autre bague d'assemblage des deux pièces de la figure 1,
- les figures 5A à 5D illustrent une séquence de montage-démontage de l'embout de l'invention équipé de la bague de la figure 4,
- la figure 6 est un schéma partiel des butées d'entraînement en rotation de la bague par l'embout,
- les figures 7A et 7B illustrent une variante de réalisation des figures 5A à 5D.

### DESCRIPTION DETAILLEE DE L'INVENTION

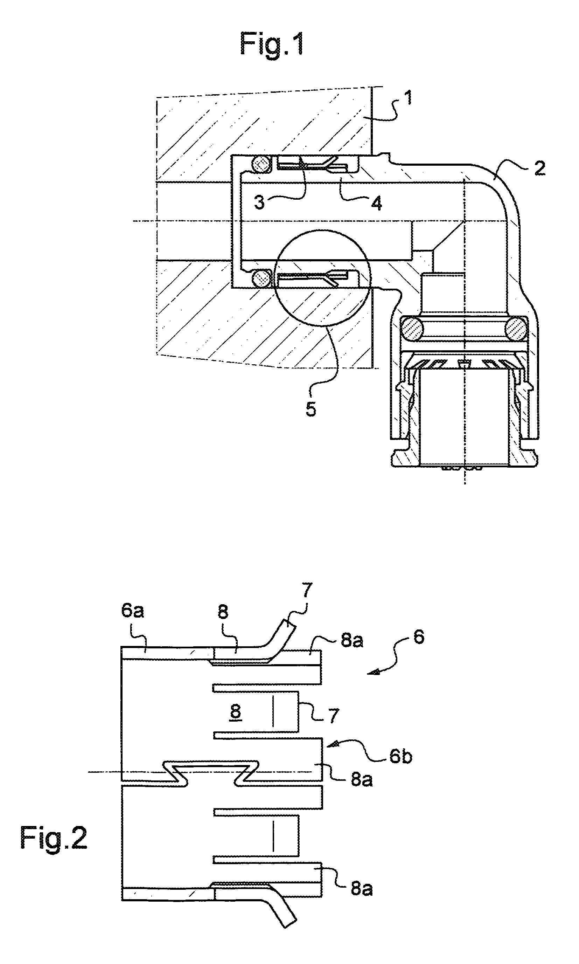

A la figure 1, on a représenté un ensemble de deux pièces 1 et 2, la pièce 1 comportant un alésage 3 et la pièce 2 comportant un embout 4. Dans le cas de la figure, la pièce 1 appartient à un équipement consommateur de fluide sous pression (vanne, distributeur, vérin, ...) et la pièce 2 est un raccord pour un tube non représenté. Le raccord est ici représenté coudé mais il peut affecter n'importe quelle géométrie connue.

Des moyens 5 symbolisent à la figure 1, la liaison de l'embout 4 dans l'alésage 3, ces moyens faisant, avec l'embout et l'alésage, l'objet de l'invention.

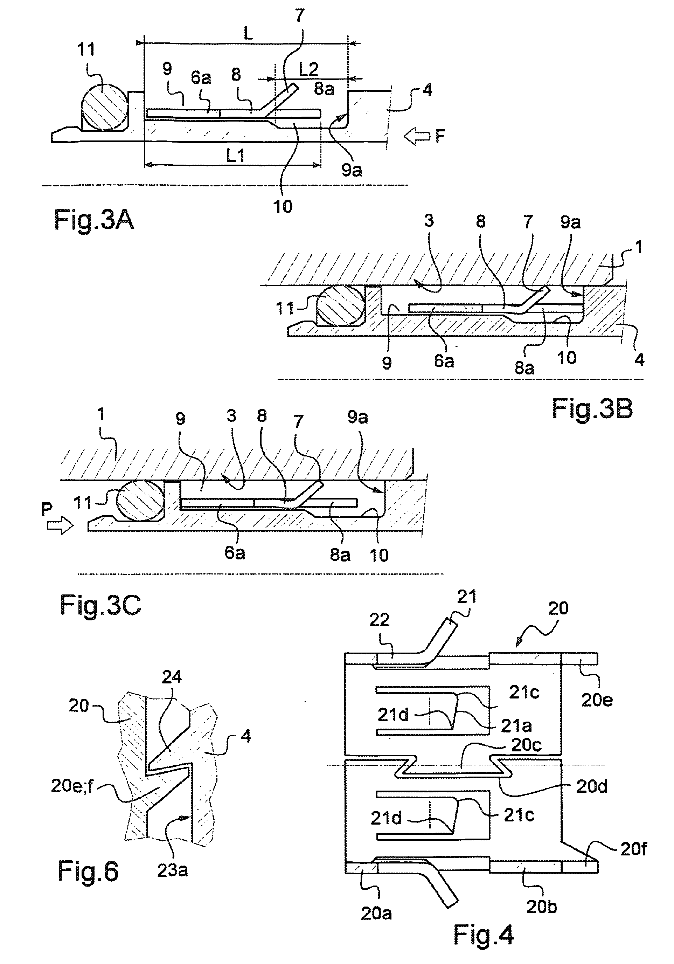

Les figures 2 et 3A à 3C illustrent le détail d'une réalisation de l'invention. La figure 2 est une vue en coupe axiale d'une bague 6 qui possède une partie cylindrique 6a et une extrémité axiale dentée 6b. Chaque dent 7 est formée par l'extrémité recourbée vers l'extérieur d'une languette ou lame 8 découpée dans la paroi de la bague 6. Chaque dent 7 alterne avec une palette 8a qui n'est pas recourbée à son extrémité. La bague 6 est formée à partir d'un feuillard découpé puis roulé sur lui-même avec ses extrémités agrafées pour en faire un cylindre. L'agrafage est ici réalisé par une découpe d'une extrémité du tronçon de feuillard qui coopère avec l'autre découpe de l'autre extrémité par correspondance de forme. Dans le cas des figures, la découpe est une queue d'aronde mâle 6c qui vient se loger dans une queue d'aronde femelle 6d, ce qui assure une grande rigidité axiale et circonférentielle de l'anneau ou de la bague ainsi obtenue.

L'agrafage des extrémités est réalisé quand le feuillard est logé dans une gorge externe 9 de l'embout 4. Dans cette disposition, la bague 6 présente ses dents 7 enveloppées par une surface cylindrique dont le diamètre est légèrement supérieur à celui de l'alésage 3. Ainsi pour que l'embout équipé de sa bague 6 puisse pénétrer dans l'alésage il faut contraindre les dents 7 à se rétreindre vers l'intérieur. Ceci est rendu possible par l'invention et sous un effort modéré, par le fait que le fond de la gorge 9 comporte une gorge secondaire 10 dans laquelle les languettes 8 qui se comportent comme des lames élastiques, peuvent aisément fléchir si la gorge 10 est située sous les languettes ou lames 8 au moment de leur introduction dans l'alésage 3. Cette position est nécessairement le cas car, selon l'invention, la longueur axiale L de la gorge est supérieure à la longueur axiale L1 de la bague 6 et la gorge secondaire 10 est située du côté du flanc 9a de la gorge qui est le flanc arrière dans le sens F de l'emmanchement de l'embout 4 dans l'alésage 3. Ainsi lors de l'emmanchement de l'embout dans l'alésage, la bague 6 est entraînée en direction du flanc 9a. La longueur axiale L2 de la gorge secondaire est suffisante pour que lorsque les languettes droites 8a sont au contact du flanc 9a, les languettes 8 porteuses des dents 7 peuvent fléchir dans la gorge 10 (voir figure 3B). Il existe une butée à l'emmanchement qui n'est pas représentée.

L'ensemble étant assemblé - figure 3B - la pression s'établit dans le circuit et il se produit un recul de l'embout dans le sens P de la figure 3C. En effet, on rappellera que, de manière connue, l'embout 4 est muni d'un joint d'étanchéité 11 qui joue le rôle d'un piston sensible à la pression régnant dans le circuit. Pendant ce mouvement, la bague 6 est stationnaire et les languettes fléchies 8 sont expulsées de la gorge secondaire 10 (qui possède un flanc en pente pour faciliter le glissement des languettes 8 hors de la gorge 10) et les dents 7 mordent plus fermement encore la paroi de l'alésage 3. La raideur de chaque dent 7/lame 8 est alors considérablement accrue et la résistance à l'extraction de l'embout renforcée d'autant.

Cette disposition a permis d'emmancher l'embout dans l'alésage sous un effort réduit par rapport à l'effort qu'il aurait fallu développer en l'absence de possibilité de fléchissement des languettes 8.

A la figure 4 on a représenté une deuxième forme de réalisation de la bague. Elle porte ici la référence 20 avec des dents 21 formées par l'extrémité recourbée vers l'extérieur de languettes 22 obtenues par découpage de la paroi de la bague 20 dans la partie médiane de celle-ci. A la différence de la figure 2, la bague porte des dents centrales encadrées par des parties cylindriques 20a et 20b. Comme précédemment, la bague est formée par enroulement sur lui-même d'un feuillard prédécoupé et agrafé par ses extrémités en queue d'aronde 20c et 20d.

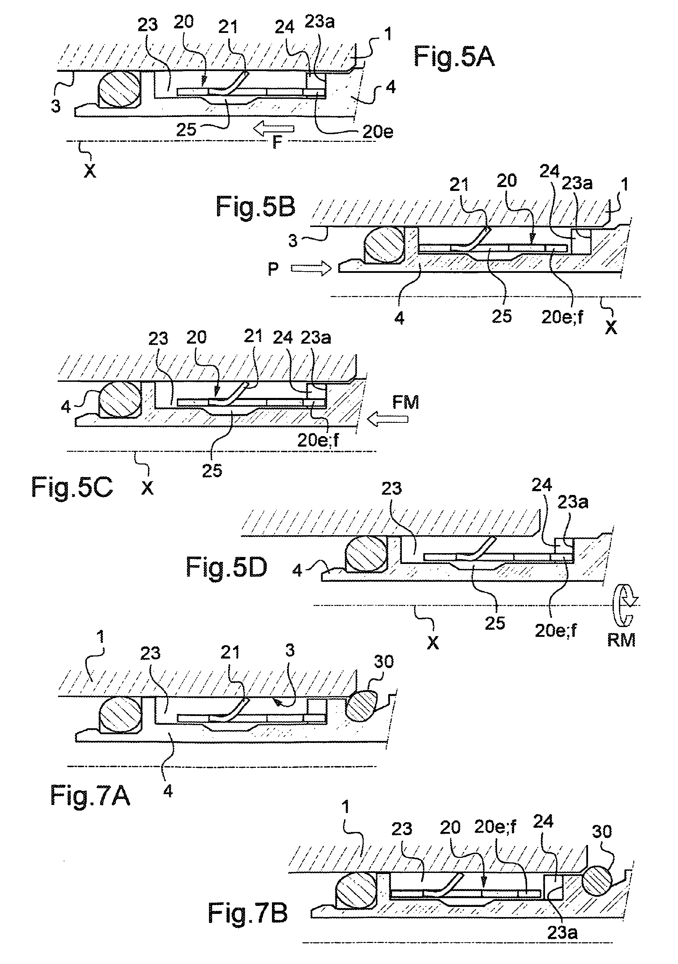

Ce dernier est donc enroulé dans une gorge 23 de l'embout 4 qui diffère de celle 9 précédemment décrite par la présence sur le flanc arrière 23a de cette gorge d'une butée 24 apte à entraîner l'une des deux butées 20e, 20f, que possède l'une des extrémités axiales de la bague 20. La figure 6 illustre cette caractéristique. Une autre différence entre les gorges 9 et 23 réside dans la position de la gorge secondaire, ici 25. Aux figures 3A-3C, celle -ci est au voisinage du flanc 9a ; à ces figures 5A-5D, elle est plutôt vers la partie centrale de la gorge 23 pour prendre en compte la position des dents 21 sur la bague 20 et leur offrir la possibilité de fléchir vers l'intérieur au moment de l'emmanchement.

Il faut par ailleurs noter que l'extrémité libre 21a de chaque dent 21 est en biais par rapport à l'axe X général de l'ensemble. Cette géométrie, connue en elle-même, permet d'obtenir un effet de vissage/dévissage de la bague dans l'alésage dans lequel elle est en prise. En effet, si on tourne la bague dans l'alésage, l'extrémité des dents de cette bague décrit une hélice qui permet d'obtenir un mouvement relatif avec une composante axiale entre l'alésage et la bague donc l'embout qui la porte. A propos de ce bord extrême 21a de chaque dent, il faut remarquer que l'angle 21b qui est en avant de la dent dans le sens du dévissage est émoussé ou arrondi pour empêcher qu'il ne se plante dans la paroi de l'alésage 3. En revanche, l'autre coin 21d est beaucoup plus vif pour opposer un effort important au vissage de la bague dans l'alésage. Il est en effet important que la bague ne vienne pas par vissage soit spontané soit malencontreux, en butée sur le flanc avant de la gorge 23 alors que le corps de la pièce 1 est en limite d'emmanchement définie par une butée extérieure à la pièce 2 et qui vient en appui sur la pièce 3. Dans ce cas, les butées ou tocs d'entraînement en rotation 20e et 20f ne pourraient plus coopérer avec le toc 24 porté par l'embout 4. Cette situation d'éloignement excessif de la bague 20 par rapport au flanc 23a pourrait résulter d'une situation toute particulière résultant, lors de l'emmanchement d'un appui du sommet du toc d'entraînement 24 sur le sommet de l'une ou l'autre des butées 20e ou f, la bague étant alors définitivement hors de portée de son accrochage en rotation avec l'embout. Ce risque est pratiquement éliminé par la forme en triangle des tocs 20e,f et 24 visibles sur la figure 6 qui conduit à un glissement d'un toc par rapport à l'autre lors d'une poussée axiale. On signalera également que les faces coopérantes de ces tocs lors de la rotation sont en contre dépouille axiale, ce qui crée un « accrochage » de la bague à l'embout lors de cet entraînement.

On remarquera également que comme dans les figures précédentes, la longueur axiale de la bague 20 est inférieure à celle de la gorge 23 de sorte que, quand la bague est au contact du flanc 23a de cette gorge, la butée 20e, 20f se trouve sur la trajectoire de la butée 24 de l'embout et peut être entraînée par elle, ce qui autorise le dévissage de la connexion. En revanche, lorsque la bague est éloignée de ce flanc 23a, la bague ne peut plus être commandée en rotation autour de son axe et tout dévissage est impossible. Or cette dernière position est celle prise (voir les figures précédents 3A-3C) quand il règne une pression P dans la conduite. Il ne peut donc pas se produire de dévissage intempestif de la connexion. La déconnexion ne peut s'opérer que par application d'un effort manuel FM (figure 5C) sur l'embout dans le sens de l'emmanchement et d'une rotation manuelle RM (figure 5D) par laquelle on entraîne la bague par l'embout au niveau des butées 20e, 20 f et 24. Les moyens de butée 6a et 24 peuvent être isolés ou au nombre de deux, trois, ... régulièrement répartis, de sorte que la mise en prise de ces moyens peut être obtenue au maximum au bout d'un tour (360°) à vide de l'embout dans le cas d'un seul ergot entre bague et embout.

Dans la variante de réalisation des figures 7A et 7B, on retrouve tous les éléments déjà décrits en regard des figure 5A-5D, avec les mêmes références. Ces figures illustrent la présence d'une butée pour l'emmanchement de l'embout dans l'alésage, qui est constituée par un joint torique 30. A la figure 7A, on comprend que le joint s'écrase la fin de l'emmanchement, au cours duquel la bague 20 est en appui sur le flanc 23a de la gorge 23. Lorsque cesse l'effort d'emmanchement F, la joint 30 recouvre sa forme initiale et engendre un mouvement relatif de retrait de l'embout hors de l'alésage ce qui a pour effet d'éloigner le flanc 23a de la bague 20 et de mettre hors d'interférence possible les deux butées 24 et 20e,f. On assure de ce fait une sécurité à l'égard d'un dévissage intempestif même sans pression dans le circuit. En outre, la butée élastique d'emmanchement (30) étant de préférence formée par un joint torique, elle est de réalisation très économique et constitue également une protection de la connexion contre des pollutions externes.

On notera que le mode de réalisation des figures 2 et 3 se prête également au dévissage si les pointes des dents sont en biais. Le flanc 9a de la gorge peut en effet comporter une excroissance qui peut se loger entre deux languettes 8a non recourbées en dents.

## Revendications

1. Embout d'insertion pour la connexion d'une pièce (2) portant cet embout (4) avec une autre pièce (1) pourvue d'un alésage (3) pour recevoir cet embout, l'embout étant pourvu d'une gorge (9,23) externe dans laquelle est logée une bague cylindrique (6,20) possédant des dents (7,21) en saillie de sa surface extérieure dont les extrémités sont contenues, à l'état libre, dans une enveloppe sensiblement cylindrique de diamètre plus important que le diamètre de l'alésage (3), **caractérisé en ce que** la bague est logée dans la gorge libre en rotation et en coulissement, **en ce que** la largeur axiale (L) de la gorge (9,23) est de dimension plus importante que la largeur axiale de la bague(6,20), **en ce que** l'extrémité (21a) des dents (21) est taillée en biais pour imprimer une morsure dans l'alésage (3) qui possède une inclinaison sur la génératrice de cette surface et **en ce que** l'un des flancs (23a) de la gorge (23) et l'extrémité en regard de la bague (20) possèdent des moyens de butée en rotation (20e,20f,24) de la bague (20) dans la gorge (23) de sorte que, lorsque la bague est en butée contre ce flanc (23a) , la bague est libre en rotation par rapport à l'embout (4) sur un angle inférieur à 360 degrés.

2. Embout selon la revendication 1, **caractérisé en ce que** les butées (20e, 20f, 24) sont de forme triangulaire avec la pointe des unes tournée vers la pointe de l'autre (24).

3. Embout selon la revendication 1 ou la revendication 2, **caractérisé en ce que** le flanc (9a,23a) en question de la gorge est celui arrière de la gorge sur lequel la bague porte dans le sens (F) de l'emmanchement.

4. Embout selon l'une des revendications précédentes, **caractérisé en ce que** les dents (7,21) sont de préférence réalisées par des languettes (8,22) axiales découpées dans la paroi de la bague (6,20) dont l'extrémité libre, opposée à la racine de chaque dent, est recourbée vers l'extérieur pour former une griffe de cramponnage de la bague dans la surface de l'alésage (3).

5. Embout selon l'une des revendications précédentes, **caractérisé en ce qu'**il porte une butée d'emmanchement (30) élastiquement déformable dans le sens de l'emmanchement et qui, en l'absence d'effort d'emmanchement, maintient la bague (20) éloignée du flanc (23a) de la gorge (23) pour empêcher toute coopération entre les butées (20a,24) d'entraînement en rotation.

6. Embout selon la revendication 5, **caractérisé en ce que** la butée élastique d'emmanchement (30) est formée par un joint torique qui constitue également une protection de la connexion contre des pollutions externes.

7. Embout selon l'une des revendications précédentes, **caractérisé en ce que** lorsque la bague (6,20) est en butée contre le flanc (9a,23a) arrière de la gorge, les dents (7,21) sont en regard d'une gorge secondaire (10,25) ménagée dans le fond de la gorge (9,23) d'accueil de la bague (6,21) dans laquelle elles peuvent élastiquement pénétrer.

8. Embout selon l'une quelconque des revendications précédentes, **caractérisé en ce que** la bague (20) est formée par un feuillard découpé refermé sur lui-même dans la gorge de l'embout par la coopération de ses extrémités découpées en correspondance de formes.

9. Embout selon la revendication 8, **caractérisé en ce que** l'extrémité biaise (21a) des dents (21) de la bague (20) possède un coin avant (21c) dans le sens du dévissage à angle arrondi et un coin arrière (21d) à angle vif.

## Patentansprüche

1. Einsteck-Nippel für die Verbindung eines Bauteils (2), das diesen Nippel (4) trägt, mit einem anderen Bauteil (1), das mit einer Bohrung (3) versehen ist, um diesen Nippel aufzunehmen, wobei der Nippel mit einer äußeren Nut (9, 23) versehen ist, in der ein zylindrischer Ring (6, 20) aufgenommen ist, der Zähne (7, 21) besitzt, die über seine Außenfläche hinausragen und deren Enden in freiem Zustand in einer im Wesentlichen zylindrischen Hüllfläche aufgenommen sind, deren Durchmesser größer als der Durchmesser der Bohrung (3) ist, **dadurch gekennzeichnet, dass** der Ring in der Nut frei drehbar und gleitend aufgenommen ist, dass die axiale Breite (L) der Nut (9, 23) größer ist als die axiale Breite des Ringes (6, 20), dass das Ende (21a) der Zähne (21) abgeschrägt ist, um in der Bohrung (3) eine Kerbe einzudrücken, die gegenüber der Erzeugenden dieser Fläche geneigt ist, und dass eine der Flanken (23a) der Nut (23) und das gegenüberliegende Ende des Ringes (20) Drehanschlagmittel (20e, 20f, 24) zur Rotation des Ringes (20) in der Nut (23) besitzen, so dass, wenn der Ring an dieser Flanke (23a) anliegt, der Ring relativ zum Nippel (4) um einen Winkel, der kleiner als 360 Grad ist, frei drehbar ist.

2. Nippel nach Anspruch 1, **dadurch gekennzeichnet, dass** die Anschläge (20e, 20f, 24) dreieckig geformt sind, wobei die Spitze der einen Anschläge der Spitze des anderen (24) zugewandt sind.

3. Nippel nach Anspruch 1 oder Anspruch 2, **dadurch gekennzeichnet, dass** die betreffende Flanke (9a, 23a) der Nut diejenige hinter der Nut ist, an der sich der Ring in Einsteckrichtung (F) abstützt.

4. Nippel nach einem der vorhergehenden Ansprüche, **dadurch gekennzeichnet, dass** die Zähne (7, 21) vorzugweise von axialen Zungen (8, 22) gebildet sind, die aus der Wand des Ringes (6, 20) geschnitten sind und deren jeweiliges freies Ende, das sich gegenüber der Basis eines jeden Zahns befindet, nach außen gebogen ist, um eine Krallenverklammerung des Ringes in der Fläche der Bohrung (3) zu bewirken.

5. Nippel nach einem der vorhergehenden Ansprüche, **dadurch gekennzeichnet, dass** er einen in Einsteckrichtung elastisch verformbaren Einsteck-Anschlag (30) aufweist, der bei Nichtvorhandensein einer Einsteckkraft den Ring (20) von der Flanke (23a) der Nut (23) beabstandet hält, um jegliches Zusammenwirken zwischen den Drehanschlägen (20a, 24) zu verhindern.

6. Nippel nach Anspruch 5, **dadurch gekennzeichnet, dass** der elastische Einsteck-Anschlag (30) von einem O-Ring gebildet ist, der ferner einen Schutz der Verbindung gegenüber äußeren Verschmutzungen bildet.

7. Nippel nach einem der vorhergehenden Ansprüche, **dadurch gekennzeichnet, dass**, wenn der Ring (6, 20) an der hinteren Flanke (9a, 23a) der Nut anliegt, sich die Zähne (7, 21) gegenüber einer im Boden der Nut (9, 23) zur Aufnahme des Ringes (6, 21) ausgebildeten sekundären Nut (10, 25) befinden, in die sie elastisch eindringen können.

8. Nippel nach einem der vorhergehenden Ansprüche, **dadurch gekennzeichnet, dass** der Ring (20) von einem zugeschnittenen Band gebildet ist, das in der Nut des Nippels durch das Zusammenwirken seiner formschlüssig geschnittenen Enden ringförmig geschlossen ist.

9. Nippel nach Anspruch 8, **dadurch gekennzeichnet, dass** das abgeschrägte Ende (21a) der Zähne (21) des Ringes (20) in Ausdrehrichtung eine vordere abgerundete Ecke (21 c) und eine hintere scharfe Ecke (21 d) aufweist.

## Claims

1. Insertion end fixture for connecting a component (2) bearing this end fixture (4) to another component (1) provided with a bore (3) to receive this end fixture, the end fixture being provided with an external groove (9, 23) in which there is housed a cylindrical ring (6, 20) that has teeth (7, 21) projecting from its external surface the ends of which are, in the free state, contained within a substantially cylindrical envelope of greater diameter than the bore (3), **characterized in that** the ring is housed in the groove with freedom to rotate and to slide, **in that** the axial width (L) of the groove (9, 23) is greater than the axial width of the ring (6, 20), **in that** the end (21a) of the teeth (21) is at an angle in order to produce an imprint in the bore (3) that is inclined to the generatrix of this surface, and **in that** one of the flanks (23a) of the groove (23) and the facing end of the ring (20) include abutment means (20e, 20f, 24) for stopping the ring (20) rotating in the groove (23) so that when the ring is abutted against this flank (23a) the ring is free to rotate relative to the end fixture (4) through an angle less than 360 degrees.

2. End fixture according to claim 1, **characterized in that** the abutments (20e, 20f, 24) are triangular with the point of some of them facing the other of them (24).

3. End fixture according to claim 1 or claim 2, **characterized in that** the flank (9a, 23a) in question of the groove is the rear flank of the groove on which the ring bears in the fitting direction (F).

4. End fixture according to any one of the preceding claims, **characterized in that** the teeth (7, 21) are preferably in the form of axial tongues (8, 22) cut into the wall of the ring (6, 20) the free end of which opposite the root of each tooth is curved outwardly to form a claw for cramping the ring in the surface of the bore (3).

5. End fixture according to any one of the preceding claims, **characterized in that** it bears a fitting abutment (30) elastically deformable in the fitting direction and which, in the absence of a fitting force, holds the ring (20) away from the flank (23a) of the groove (23) to prevent cooperation between the abutments (20a, 24) driving rotation.

6. End fixture according to Claim 5, **characterized in that** the elastic fitting abutment (30) is formed by an O-ring which also protects the connection against external pollution.

7. End fixture according to any one of the preceding claims, **characterized in that** when in the ring (6, 20) is abutted against the rear flank (9a, 23a) of the groove, the teeth (7, 21) face a secondary groove (10, 25) formed in the bottom of the groove (9, 23) receiving the ring (6, 21) into which they can penetrate elastically.

8. End fixture according to any one of the preceding claims, **characterized in that** the ring (20) is formed by a cut strip closed on itself in the groove of the end fixture by co-operation of its ends that are cut with corresponding shapes.

9. End fixture according to claim 8, **characterized in that** the end (21a) at an angle of the teeth (21) of the ring (20) has a rounded front corner (21c) in the unscrewing direction and sharp rear corner (21d).
